# EUROPÄISCHE PATENTSCHRIFT

(11) **EP 0 400 188 B1**
(45) Veröffentlichungstag und Bekanntmachung des Hinweises auf die Patenterteilung: **13.10.1993**
(21) Anmeldenummer: 89109987.1
(22) Anmeldetag: 02.06.1989
(51) Int. Cl.: B60J 5/06

(54) **Schwenkschiebetür für Fahrzeuge**
Swingable sliding door for vehicles
Portière articulée et coulissante pour véhicules automobiles

(43) Veröffentlichungstag der Anmeldung: 05.12.1990
(73) Patentinhaber: IFE Industrie-Einrichtungen Fertigungs-Aktiengesellschaft, A-3340 Waidhofen a.d. Ybbs (AT)
(72) Erfinder: Brandenburg, Rudolf, D-4030 Ratingen 6 (DE); Goldbach, Horst, D-4030 Ratingen 6 (DE)
(74) Vertreter: Götz, Friedrich, Dipl.-Phys.

(56) Entgegenhaltungen:
- DE-A- 2 656 495
- DE-A- 3 630 229
- DE-U- 8 509 717
- PATENT ABSTRACTS OF JAPAN vol. 7, no. 169 (M-231)(1314) 26 Juli 1983,& JP-A-58 73427 (TOYOTA SHIYATAI) 02 Mai 1983,

## Beschreibung

Die Erfindung betrifft eine Schwenkschiebetür für Fahrzeuge, insbesondere zur Personenbeförderung, mit ein oder zwei im geschlossenen Zustand in der Fahrzeugwand, im geöffneten Zustand außen vor der Fahrzeugwand angeordneten Türblättern, die an Führungsschienen sowie in einer Teleskopführung geführt und mit Hilfe einer Antriebseinrichtung zu betätigen sind, wobei die Antriebseinrichtung Schwenkhebel aufweist, welche die Türblätter aus der geschlossenen Stellung in eine öffnungsbereite Stellung schwenken, wobei ferner die Antriebseinrichtung auf die Schwenkhebel eine Reaktionskraft ausübt, die im Schließzustand zur Verriegelung der Schwenkhebel führt, wobei als Antriebseinrichtung eine seitlich über der Türöffnung angebrachte Elektromotor-Getriebe-Einheit dient.

Bei dieser Tür nimmt die Abtriebsscheibe des Antriebs mittels eines durch eine Umlenkscheibe geführten Zugmittels das Türblatt oder die Türblätter mit.
Ein schwenkbarer Gehäuseflansch des Antriebes trägt einen exzentrischen Steuerzapfen, der in einen auf der Türsäule befestigten Steuerhebel eingreift.
Die Türsäule weist oben und unten Rollenschwenkhebel auf, deren Rollen in türseitigen Führungsschienen laufen.
In Schließlage bildet der Hebelarm des Steuerzapfens mit der Kurve des Steuerhebels einen rechten Winkel, so daß die Tür sicher verriegelt ist und nicht von Hand oder durch Windkräfte geöffnet werden kann.
Im Notfall ist eine Notauslösung zu verwirklichen.

Eine derartige Schwenkschiebetür ist aus der DE-A-3 630 229 bekannt.

Der Erfindung liegt daher die Aufgabe zugrunde, die pneumatisch betriebene Schwenkschiebetür so umzugestalten, daß sie mit einem besonders einfachen Elektroantrieb bewegt und verriegelt werden kann, wobei zugleich mit geringsten Mitteln eine Notentriegelung zu verwirklichen ist, die dann zum Einsatz kommt, wenn das Stromnetz ausgefallen sein sollte.

Die beschriebene Aufgabe wird bei einer Schwenkschiebetür nach der DE-A-3 630 229 erfindungsgemäß dadurch gelöst, daß der das Getriebe und den Motor tragende Flansch einen Ausleger aufweist, der mit einem Bowdenzug zur Notauslösung verbunden ist.

Weiterbildungen der Erfindung sind in den abhängigen Ansprüchen angegeben.

### Beschreibung der Zeichnungen

Die Erfindung wird anhand eines Ausführungsbeispieles nach Fig. 1 - 6 der Zeichnung erläutert.
- Fig. 1: stellt eine Draufsicht auf das Antriebssystem einer zweiflügeligen Schwenkschiebetür dar. Die Tür ist im Schließzustand gezeichnet.
- Fig. 2: zeigt die gleiche Anordnung im offenen Zustand.
- Fig. 3: ist ein verkürzt dargestellter Schnitt durch die Tür mit einer Ansicht des Getriebemotors im Dachbereich.
- Fig. 4: gibt einen Schnitt durch die Motor-Getriebe-Einheit wieder,
- Fig. 5: verdeutlicht die Kinematik beim Ausschwenken und Verriegeln der rechten Türseite,
- Fig. 6: zeigt eine Innenansicht vom Antriebsmechanismus der linken Türhälfte.

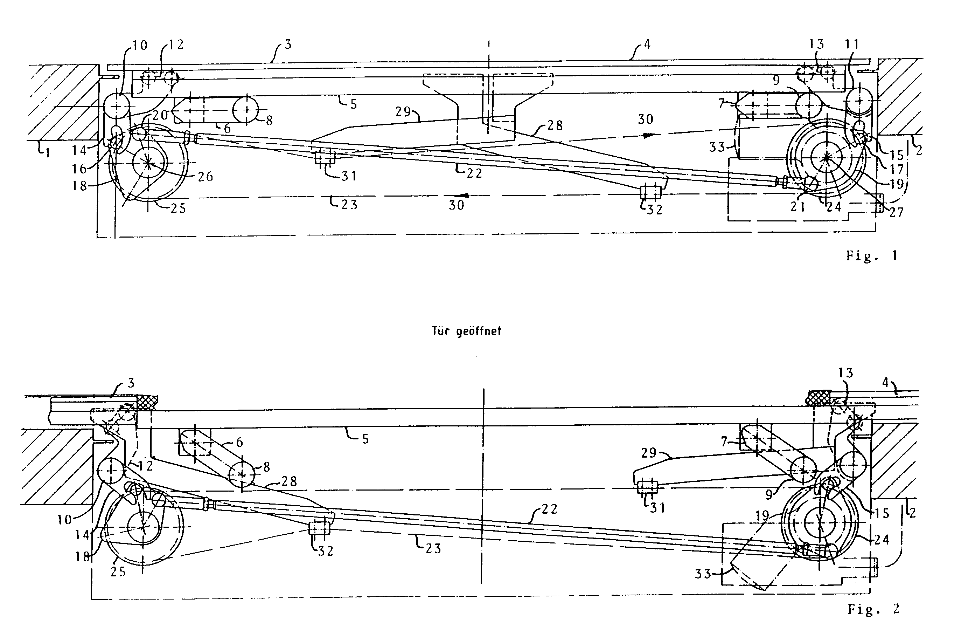

In Fig. 1 ist mit 1 der linke und mit 2 der rechte Türpfosten bezeichnet. Dazwischen liegt das linke Türblatt 3 und das rechte 4. Unmittelbar hinter den Türblättern liegt eine durchgehende Teleskopschiene 5. Diese Schiene ist an Schwenkarmen 6, 7 aufgehängt, die über Lagerbolzen 8, 9 mit dem Haupttürträger im Dachbereich verbunden sind.

Unmittelbar neben den Türpfosten 1, 2 sind Türsäulen 10, 11 gelagert, die Rollenschwenkhebel 12, 13 tragen. Ferner erkennt man geschlitzte Steuerhebel 14, 15, in die Steuerzapfen 16, 17 eingreifen. Diese Zapfen sitzen auf schwenkbar gelagerten Flanschen 18, 19, die zusätzlich Kugelköpfe 20, 21 tragen. Beide Kugelköpfe sind durch eine justierbare Kupplungsstange 22 miteinander verbunden. Verdreht man den Flansch 19 um einen begrenzten Winkel entgegen dem Uhrzeigersinn, wird der Flansch 18 im Uhrzeigersinn mitgenommen. Als Folge davon werden die Hebel 14, 15, die Türsäulen 10, 11 und die Rollenschwenkhebel 12, 13 ebenfalls gegenläufig verschwenkt, wodurch die Türblätter 3, 4 und die damit verbundene Teleskopschiene 5 entsprechend Fig. 2 aus der Karosserieebene herausbewegt werden.

Nach diesem Schwenkvorgang können dann die Türblätter 3, 4 in Öffnungsrichtung aufgeschoben werden, bis der in Fig. 2 dargestellte Zustand der Vollöffnung erreicht ist. Die eigentliche Öffnungs- und Schließbewegung wird durch ein strichpunktiert angedeutetes Zugmittel 23 bewirkt, das von einer Abtriebsscheibe 24 und einer Umlenkscheibe 25 geführt ist.

Die Teile 18 und 25 bewegen sich um dieselbe Drehachse 26, sind aber nicht miteinander gekoppelt. Entsprechendes gilt für die Teile 19, 24 sowie die Achse 27. Das Zugmittel 23, vorzugsweise ein schlupffreier Zahnriemen, ist über schräggestellte Zugarme 28, 29 mit den Türblättern fest verbunden, die beiden Zugarme 28, 29 überkreuzen sich im Raum. Wenn sich die Scheiben 24, 25 im Uhrzeigersinn drehen, bewegt sich das Zugmittel 23 in Richtung der Pfeile 30, so daß sich beide Türblätter 3, 4 öffnen.

Ein Vergleich von Fig. 1 und 2 zeigt, daß sich die Zugarme 28, 29 nicht nur auf der Ideallinie seitwärts bewegen, sondern daß sie auch um die Türblattstärke mit nach außen geschwenkt werden. Dabei erfährt das Zugmittel 23 eine gewisse Verformung und Dehnung, wie man besonders gut an der Klemmvorrichtung 31 in Fig. 1 und 32 in Fig. 2 erkennen kann. Vorzugsweise sind die Zugarme 28, 29 so ausgebildet, daß jede der Klemmvorrichtungen 31, 32 einen gleichgroßen Weg links und rechts von der Symmetrieebene der Tür zurücklegt. Hierdurch und durch die Anwendung einer im Vergleich zur Abtriebsscheibe 24 wesentlich kleineren Umlenkscheibe 25 wird die Dehnung des Zugmittels 23 auf ein Minimum reduziert.
Die bisher beschriebenen Funktionen des Ausschwenkens und Verschiebens werden von einer einzigen Antriebseinheit bewirkt, deren Kernstück ein strichpunktiert angedeuteter Elektromotor 33 mit angeschlossenem Schneckengetriebe ist. Die Abtriebsachse des Getriebes fällt mit der Achse 27 zusammen. Das Gehäuse der Motor-Getriebe-Einheit ist mit dem Flansch 19 fest verbunden, also ebenfalls um die Achse 27 begrenzt schwenkbar. Wenn der Motor 33, vorzugsweise ein elektronisch geregelter Gleichstrommotor, an Spannung gelegt wird, entsteht an seiner Abtriebsscheibe ein bestimmtes Drehmoment, das aus der Schließposition nach Fig. 1 im Uhrzeigersinn wirken muß. Zugleich aber wird auf das Getriebegehäuse und damit auf den Flansch 19 ein gleich großes Gegenmoment ausgeübt, das versucht, den Flansch 19 und damit auch den Flansch 18 entgegen dem Uhrzeigersinn zu bewegen. Solange die Türflügel 3, 4 nicht ausgeschwenkt sind, kann es nicht zu einer Translationsbewegung kommen. Folglich muß zunächst das Gegenmoment den Motor 33 etwa um 45° links herum verschwenken. Dabei drückt der Steuerzapfen 17 den Steuerhebel 15 ebenfalls nach links und der Rollenschwenkhebel 13 klappt nach rechts um.
Die gleichen Vorgänge laufen mit umgekehrtem Vorzeichen an der linken Türsäule 10 ab, so daß die Türblätter 3, 4 und die Teleskopschiene 5 nach außen schwenken können.

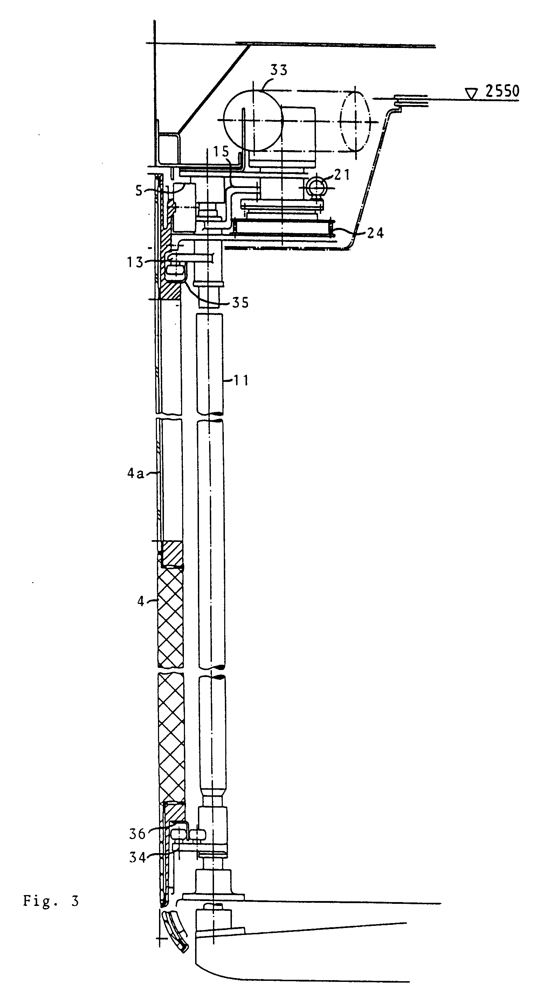

Fig. 3 zeigt verkürzt einen Vertikalschnitt durch die Tür mit Blick auf den Motor 33 und das angeschlossene Getriebe mit der Abtriebsscheibe 24, dem Kugelkopf 21 und dem Steuerhebel 15.
Das Türblatt 4 mit dem eingesetzten Fenster 4a ist im Schnitt dargestellt. Die Türsäule 11 ist im Boden- und Dachbereich gelagert und trägt außer dem genannten Steuerhebel 15 den oberen Rollenschwenkhebel 13 und einen unteren Rollenschwenkhebel 34. Die zugehörigen Führungsschienen 35, 36 sind in Aussparungen des Türblattes 4 eingesetzt.

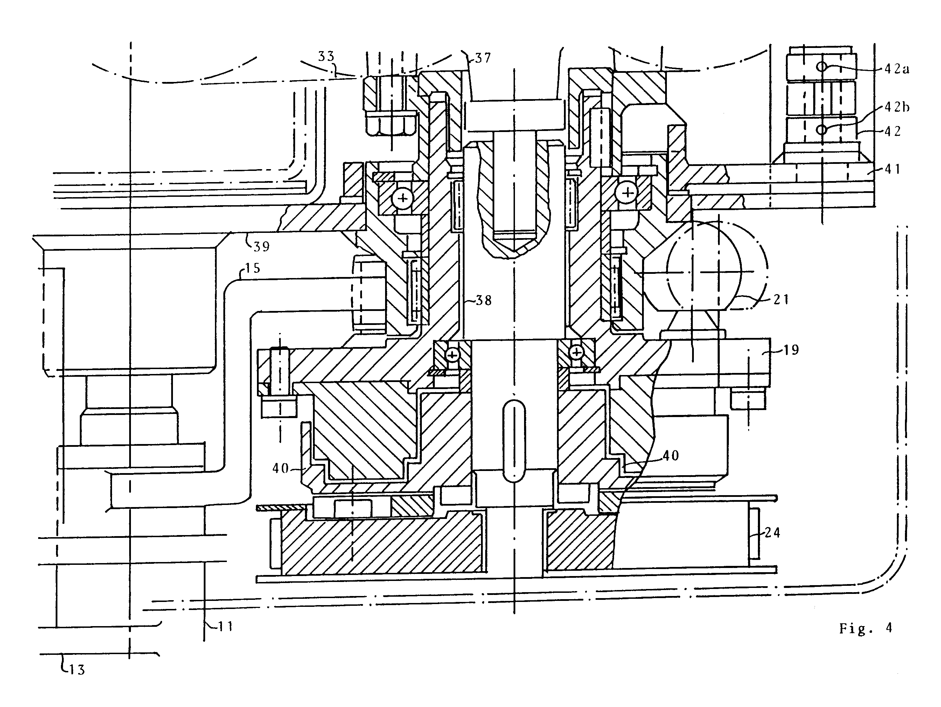

In Fig. 4 ist die Motor-Getriebe-Einheit im Schnitt dargestellt. Am linken Rand erkennt man die Türsäule 11 mit dem Rollenschwenkhebel 13 und dem abgekröpften Steuerhebel 15. Der Elektromotor 33 wirkt über ein Schneckengetriebe 37 auf eine Abtriebswelle 38, die mit der Abtriebsscheibe 24 verbunden ist. Die Motor-Getriebe-Einheit ist an einem Basisblech 39 schwenkbar aufgehängt. Zwischen Abtriebswelle 38 und Abtriebsscheibe 24 ist eine Elektromagnetkupplung 40 angeordnet, so daß die Scheibe 24 nur dann Drehmoment übertragen kann, wenn die Kupplung 40 erregt ist. Auf dem Flansch 19 ist der Kugelkopf 21 befestigt, der es ermöglicht, die Verschwenkung der Motor-Getriebe-Einheit auf die zweite Türhälfte zu übertragen. Zusätzlich ist an einem Ausleger 41 ein Bolzen 42 befestigt, der über Querbohrungen 42a, 42b die Drahtseile von Bowdenzügen für eine Notentriegelung aufnehmen kann.

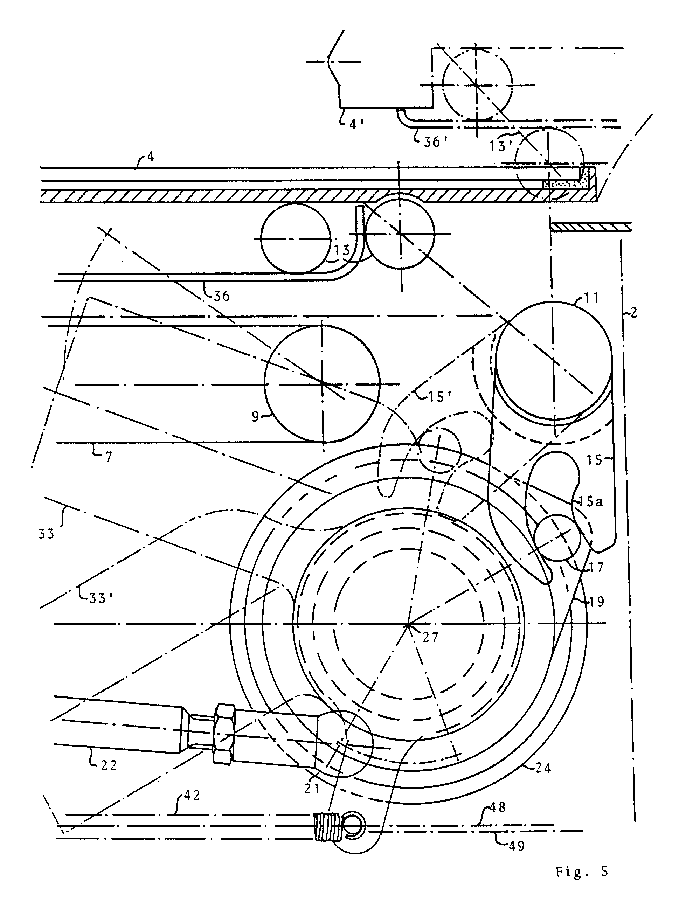

Fig. 5 zeigt eine Draufsicht auf die Steuerelemente der rechten Türseite. Die Lage der Teile bei geschlossener Tür ist mit durchgezogenen Linien gekennzeichnet. Die Offen-Position ist strichpunktiert angedeutet. Der Steuerhebel 15 weist einen gekrümmten Steuerschlitz 15a auf. In der Schließposition ruht der Steuerzapfen 17 an einem Abschnitt der Steuerkurve, der einen rechten Winkel zur Drehachse 27 bildet. Dies bedeutet, daß ein von der Drehsäule 11 ausgeübtes Drehmoment im Uhrzeigersinn keine tangentiale Kraft auf den Flansch 19 ausüben kann. Mit anderen Worten nimmt der Steuerhebel 15 eine echte Totpunktlage ein, die durch Ziehen und Zerren am Türblatt 4 nicht überwunden werden kann. Die Tür ist also sicher verriegelt. Dieser Zustand wird noch durch eine Schraubenfeder 42 unterstützt. Um die öffnung einzuleiten, wird der Motor 33 in Öffnungsrichtung eingeschaltet. Zugleich wird die Elektromagnetkupplung 40 aktiviert. Da sich aber die Abtriebsscheibe 24 wegen der Verriegelung des Türblattes noch nicht bewegen kann, wird das Gegenmoment auf die Motor-Getriebe-Einheit übertragen. Sie schwenkt entgegen dem Uhrzeigersinn und bringt dabei den Steuerhebel 15 in die Position 15′. Die Drehsäule 11 bewegt sich im Uhrzeigersinn und stellt den Rollenschwenkhebel 13 in die Position 13'. Dabei wird das Türblatt 4 vor die Karosserieebene geschwenkt. Mit dem Ausschwenken der Tür kann sie nun durch die Abtriebsscheibe 24 über das Zugmittel 23 parallel zur Karosserieebene aufgeschoben werden.

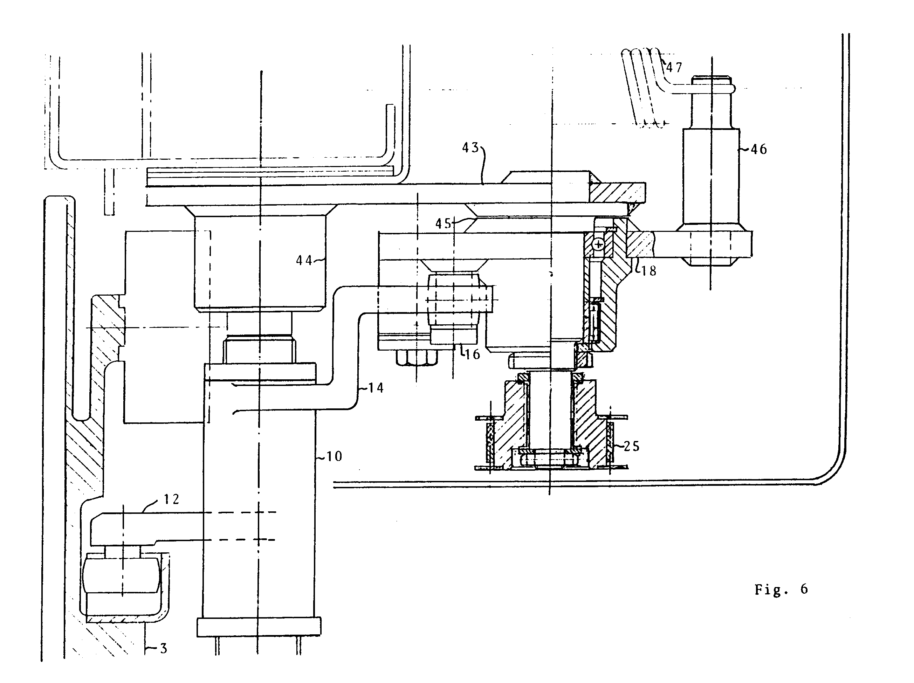

Das linke Türblatt wird über die Kupplungsstange 22 in gleicher Weise entriegelt und angetrieben, wie Fig. 6 zeigt. Dort ist im Dachbereich eine Basisplatte 43 vorgesehen, die sowohl das Lager 44 der Türsäule 10 als auch ein Lagerschild 45 für einen schwenkbaren Flansch 18 und die Umlenkscheibe 25 trägt. Auf dem Flansch 18 ist der Steuerzapfen 16 und auch ein Bolzen 46 fixiert, in den eine Schraubenfeder 47 eingehängt ist. Der Durchmesser der Unlenkscheibe 25 ist wesentlich kleiner als der der Abtriebsscheibe 24.

Zur schlupffreien Übertragung der Kräfte wird vorzugsweise als Zugmittel ein Zahnriemen eingesetzt, wobei die Abtriebsscheibe und die Umlenkscheibe entsprechende Zahnungen aufweisen. Hierdurch wird erreicht, daß beide Türblätter auch nach längerer Betriebszeit absolut synchron laufen.

Die Notöffnung der Tür muß auch dann noch gewährleistet sein, wenn der Elektromotor versagt oder der Strom ausfällt. Bevor die Tür von Hand aufgeschoben werden kann, muß sie zunächst entriegelt werden. Dies geschieht durch einen inneren oder äußeren Bowdenzug, der den Flansch 19 mit der Motor-Getriebe-Einheit nach links verschwenkt und dabei den oder die Steuerhebel aus der Totlage herausführt. Zugleich drücken die Rollenschwenkhebel die Türblätter aus der Türebene heraus, so daß sie von Hand aufgeschoben werden können.

Da die Elektromagnetkupplung im stromlosen Zustand entkuppelt ist, läuft die Abtriebsscheibe leicht und frei durch. Bei der Öffnung oder Schließung der Tür von Hand genügt es, ein Türblatt anzuschieben. Das zweite wird über den Zahnriemen mitgenommen.

Falls man einen langsam laufenden Elektromotor mit großem Drehmoment verwendet, könnte auf das selbsthemmende Schneckengetriebe und die Elektromagnetkupplung verzichtet werden.

Die Kupplung könnte auch bei einem Elektromotor mit Kegelradgetriebe entfallen.

### Gewerbliche Verwertbarkeit

Die neuartige Schwenkschiebetür kann vorteilhaft in allen Schienen- und Straßenfahrzeugen eingesetzt werden. Für die Betätigung jeder ein- oder zweiflügeligen Schwenkschiebetür wird nur ein Elektromotor benötigt, dessen Versorgung aus dem ohnehin für Steuerzwecke vorhandenen Gleichstromnetz erfolgen kann. Dieser Motor dient auf verblüffend einfache Weise sowohl der Türbewegung als auch ihrer Verriegelung.

### Bezugszeichenliste

- 1: linker Türpfosten
- 2: rechter Türpfosten
- 3: linkes Türblatt
- 4: rechtes Türblatt
- 5: Teleskopschiene
- 6, 7: Schwenkarme
- 8, 9: Lagerbolzen
- 10, 11: Türsäulen
- 12, 13: Rollenschwenkhebel
- 14, 15: Steuerhebel
- 16, 17: Steuerzapfen
- 18, 19: Flanschen
- 20, 21: Kugelköpfe
- 22: Kupplungsstange
- 23: Zugmittel
- 24: Abtriebsscheibe
- 25: Umlenkscheibe
- 26, 27: Drehachse
- 28, 29: Zugarme
- 30: Pfeile
- 31, 32: Klemmvorrichtungen
- 33: Elektromotor
- 34: unterer Rollenschwenkhebel
- 35, 36: Führungsschienen
- 37: Schneckengetriebe
- 38: Abtriebswelle
- 39: Basisblech
- 40: Elektromagnetkupplung
- 41: Ausleger
- 42: Bolzen
- 43: Basisplatte
- 44: Lager
- 45: Lagerschild
- 46: Bolzen
- 47: Schraubenfeder
- 48, 49: Bowdenzüge

## Patentansprüche

1. Schwenkschiebetür für Fahrzeuge, insbesondere zur Personenbeförderung, mit ein oder zwei im geschlossenen Zustand in der Fahrzeugwand, im geöffneten Zustand außen vor der Fahrzeugwand angeordneten Türblättern (34), die an Führungsschienen sowie in einer Teleskopführung (5) geführt und mit Hilfe einer Antriebseinrichtung zu betätigen sind, wobei die Antriebseinrichtung Schwenkhebel aufweist, welche die Türblätter aus der geschlossenen Stellung in eine öffnungsbereite Stellung schwenken, wobei ferner die Antriebseinrichtung auf die Schwenkhebel eine Reaktionskraft ausübt, die im Schließzustand zur Verriegelung der Schwenkhebel führt, wobei als Antriebseinrichtung eine seitlich über der Türöffnung angebrachte Elektromotor-Getriebe-Einheit (33, 37) dient,
a) deren Abtriebsscheibe (24) mittels eines durch eine Umlenkscheibe (25) geführten Zugmittels (23) das Türblatt oder die Türblätter (3, 4) mitnimmt,
b) deren schwenkbarer Gehäuseflansch (19) einen exzentrischen Steuerzapfen (17) trägt, der in einen auf der Türsäule (11) befestigten Steuerhebel (15) eingreift,
wobei die Türsäule (11) oben und unten Rollenschwenkhebel (13, 34) trägt, deren Rollen in türseitigen Führungsschienen (35, 36) laufen,
wobei in Schließlage der Hebelarm des Steuerzapfens (17) mit der Kurve des Steuerhebels (15) einen rechten Winkel einschließt, so daß die Tür sicher verriegeltist und nicht von Hand oder durch Windkräfte geöffnet werden kann und wobei eine Notauslösung im Notfall zu verwirklichen ist, dadurch gekennzeichnet,
daß der das Getriebe (37) und den Motor (33) tragende Flansch (19) einen Ausleger (41) aufweist, der mit einem Bowdenzug (48 oder 49) zur Notauslösung verbunden ist.

2. Schwenkschiebetür nach Anspruch 1, dadurch gekennzeichnet, daß bei einer zweiflügeligen Tür in der Nähe der Zweiten Türsäule (10) ein Flansch (18) schwenkbar gelagert ist, der ebenfalls einen Steuerzapfen (16) aufweist, der in einen mit der zweiten Türsäule (10) verbundenen Steuerhebel (14) eingreift, und daß zwischen den beiden Flanschen (18, 19) eine Kupplungsstange (22) angebracht ist, die eine gegenläufige Steuerbewegung des zweiten Flansches (18) bewirkt und das zweite Türblatt (3) ebenso verriegelt.

3. Schwenkschiebetür nach Anspruch 1 und 2, dadurch gekennzeichnet, daß die Antriebseinheit ein selbsthemmendes Schneckengetriebe (37) aufweist.

4. Schwenkschiebetür nach Anspruch 1 und 2, dadurch gekennzeichnet, daß die Türblätter (3, 4) im ausgeschwenkten Zustand durch einen Zahnriemen als Zugmittel (23) synchron und schlupffrei von einer Zahnscheibe angetrieben sind, so daß die Winkelstellung der Zahnscheiben exakt den Türblattstellungen zuzuordnen ist.

5. Schwenkschiebetür nach Anspruch 3, dadurch gekennzeichnet, daß zwischen dem Getriebe (37) und der Abtriebsscheibe (24) eine Elektromagnetkupplung (40) angeordnet ist, damit im Notöffnungsfalle die Abtriebsscheibe (24) frei durchlaufen kann.

6. Schwenkschiebetür nach Anspruch 1 - 4, dadurch gekennzeichnet, daß die Abtriebszahnscheibe ungefähr den dreifachen Durchmesser aufweist wie die Umlenkzahnscheibe, wobei die Bewegungen der Zugarme (28, 29) senkrecht zur Türebene durch Längungen des Zahnriemens ausgleichbar sind.

7. Schwenkschiebetür nach Anspruch 6, dadurch gekennzeichnet, daß die Zugarme (28, 29) zwischen Türblatt und Zahnriemen in einem Winkel von weniger als 45° angeordnet sind, so daß sich der Abstand zwischen den Zahnscheiben und den Angriffspunkten der Zugarme vergrößert.

8. Schwenkschiebetür nach Anspruch 7, gekennzeichnet durch eine solche Ausbildung der Zugarme (28, 29), daß jede der Klemmvorrichtungen (31, 32) einen gleich großen Weg links und rechts von der Symmetrieebene der Tür zurücklegt.

## Claims

1. A swingable sliding door for vehicles, in particular vehicles for passenger conveyance, with one or two door leaves (34) arranged in the vehicle wall, when said leaves are closed, and outside in front of the vehicle wall, when they are open, said leaves running in guide tracks and in a telescopic guide (5) and which can be activated using a drive mechanism, said drive mechanism having pivoted levers which swing the door leaves out of the closed position into a position ready for opening and, furthermore, said drive mechanism exerting a reaction force on the pivoted levers which, in the closed state, results in said levers being locked, whereby an electric motor/gear unit assembly (33, 37) located in the side above the door opening serves as the drive mechanism,
a) the output gear (24) of said drive unit entraining the door leaf or door leaves (3, 4) by means of a traction mechanism (23) guided by a deflection gear (25),
b) the swingable housing flange (19) of said drive unit having an eccentric control fixture (17) which engages a control lever (15) attached to the door column (11),
whereby said door column (11) has roller pivoted levers (13, 34) at the top and bottom whose rollers run in guide tracks (35, 36) in the door,
whereby, in the closed position, the lever arm of the control fixture (17) forms a right angle with the cam of the control lever (15) with the result that the door is safely locked and cannot be opened by hand or force of the wind and whereby emergency activation can be executed in an emergency,
characterised in that
the flange (19) bearing the gear unit (37) and the motor (33) has a bracket (41) which is connected to a Bowden cable (48 or 49) for emergency activation.

2. A swingable sliding door according to claim 1, characterised in that with a two-leaf door a flange (18) is pivot-mounted near the second door column (10), said flange also having a control fixture (16) which engages a control lever (14) connected to the second door column (10), and in that a coupling rod (22) is mounted between the two flanges (18, 19), said rod causing an opposite control motion of the second flange (18) and also locking the second door leaf (3).

3. A swingable sliding door according to claims 1 and 2, characterised in that the drive unit has a self-locking worm gear unit (37).

4. A swingable sliding door according to claims 1 and 2, characterised in that the door leaves (3,4) in the swung-out condition are driven synchronously and slip-free by a gear through a toothed belt as the traction mechanism (23), which means that the angular position of the gears can be accurately assigned to the door leaf positions.

5. A swingable sliding door according to claim 3, characterised in that an electromagnetic coupling (40) is arranged between the gear unit (37) and the output gear (24) so that, if the door is opened in an emergency, the output gear (24) can turn freely.

6. A swingable sliding door according to claims 1 to 4, characterised in that the output gear has a diameter roughly three times that of the deflection gear, whereby the motions of the traction arms (28, 29) can be offset normal to the door plane through the elongation of the toothed belt.

7. A swingable sliding door according to claim 6, characterised in that the traction arms (28, 29) are arranged between the door leaf and the toothed belt at an angle of less than 45°, thus increasing the distance between the gears and the points of application of the traction arms.

8. A swingable sliding door according to claim 7, characterised by such a design of the traction arms (28, 29) that each of the clamping devices (31, 32) travels equal distances on the left and right of the plane of symmetry of the door.

## Revendications

1. Portière articulée et coulissante pour véhicules automobiles, en particulier ceux servant au transport des personnes, avec un ou deux vantail (aux) de portière (3,4) situés dans la paroi du véhicule lorsqu'ils sont fermés et dehors devant la paroi du véhicule lorsqu'ils sont ouverts, qui (3,4) s'actionnent à l'aide d'un dispositif d'entraînement le long de rails de guidage ainsi que dans un guide télescopique (5), le dispositif d'entraînement présentant des leviers pivotants faisant basculer les vantaux de portière de la position fermée en une position parée pour l'ouverture, le dispositif d'entraînement exerçant en outre une force de réaction sur les leviers pivotants qui à l'état de fermeture entraîne le verrouillage des leviers pivotants, une unité à motoréducteur électrique (33, 37) montée latéralement au-dessus de l'orifice de la portière servant de dispositif d'entraînement,
a) dont la poulie de prise de force (24) entraîne le ou les vantail(aux) de portière (3,4) par le biais d'un moyen de traction (23) guidé par une poulie de renvoi (25),
b) dont le flasque (19) de boîtier pivotant comporte un tourillon (17) excentrique de commande engrenant dans un levier de commande (15) fixé contre la colonne de portière (11),
la colonne de portière (11) comportant en haut et en bas des leviers pivotants à galets (13, 14) dont lesdits galets circulent dans des rails de guidage (35, 36) situés du côté de la portière,
en position de fermeture, le bras de levier du tourillon de commande (17) formant un angle droit avec la came du levier de commande (15), de sorte que la portière soit sûrement verrouillée et ne puisse être ouverte ni manuellement ni par la force éolienne, un déclenchement de secours étant réalisable en cas d'urgence,
**caractérisée en ce que**
le flasque (19) portant le réducteur (37) et le moteur (33) présente un bras (41) relié à un câble Bowden (48 ou 49) servant au déclenchement d'urgence.

2. Portière articulée et coulissante selon revendication 1, **caractérisée en ce qu**'en présence d'une portière à deux battants un flasque (18) se trouve en appui pivotant à proximité de la seconde colonne (10) de portière (10) et présente également un tourillon (16) de commande engrenant dans un levier de commande (14) relié à la seconde colonne (10) de portière et en ce qu'une barre d'accouplement (22) est montée entre les deux flasques (18, 19), laquelle (22) provoque un mouvement de commande en sens antagoniste du second flasque (18) et verrouille de même le second vantail de portière (3)

3. Portière articulée et coulissante selon revendications 1 et 2, **caractérisée en ce que** l'unité d'entraînement présente un engrenage à vis sans fin (37) autobloquant.

4. Portière articulée et coulissante selon revendications 1 et 2, **caractérisée en ce que** les vantaux de portière (3, 4) sont, en position totalement pivotée, entraînés en synchronisme et sans glissement par une poulie crantée via une courroie crantée servant de moyen de traction (23), de sorte que l'angle formé par les poulies dentées corresponde exactement aux positions des vantaux de portière.

5. Portière articulée et coulissante selon revendication 3, **caractérisée en ce qu**'entre le réducteur (37) et la poulie de prise de force (24) se trouve un embrayage électromagnétique (40) pour que la poulie de prise de force (24) puisse tourner en roue libre au cas où une ouverture d'urgence de la portière serait nécessaire.

6. Portière articulée et coulissante selon les revendications 1 à 4, **caractérisée en ce que** la poulie crantée de prise de force a un diamètre environ triple de celui de la poulie crantée de renvoi, les mouvements des bras de traction (28, 29) perpendiculairement au plan de la portière étant égalisables par des allongements de la courroie crantée.

7. Portière articulée et coulissante selon revendication 6, **caractérisée en ce que** les bras de traction (28, 29) disposés entre le vantail de portière et la courroie crantée forment un angle inférieur à 45° pour qu'augmente l'écart entre les poulies crantées et les points d'attaque des bras de traction.

8. Portière articulée et coulissante selon revendication 7, **caractérisée en ce que** les bras de traction (28, 29) sont conformés de telle sorte que chacun des dispositifs de bridage (31, 32) parcoure une distance égale à gauche et à droite du plan de symétrie de la portière.
